Europäisches Patentamt

European Patent Office

Office européen des brevets

(19)

(11) Veröffentlichungsnummer : **0 208 296 B1**

# EUROPÄISCHE PATENTSCHRIFT

(12)

(45) Veröffentlichungstag der Patentschrift :
30.01.91 Patentblatt 91/05

(51) Int. Cl.⁵ : **A23L 1/212, A23G 3/00**

(21) Anmeldenummer : **86109306.0**

(22) Anmeldetag : **08.07.86**

(54) **Chip aus gerösteten, getrockneten oder gebackenen Früchten, insbesondere Bananen, und ein Verfahren zur Chipherstellung.**

(30) Priorität : **12.07.85 DE 8520185 U**

(43) Veröffentlichungstag der Anmeldung :
**14.01.87 Patentblatt 87/03**

(45) Bekanntmachung des Hinweises auf die
Patenterteilung :
**30.01.91 Patentblatt 91/05**

(84) Benannte Vertragsstaaten :
**AT BE CH DE FR GB IT LI NL SE**

(56) Entgegenhaltungen :
**BE-A- 421 538**
**DE-A- 2 545 724**
**DE-C- 493 831**

(56) Entgegenhaltungen :
**FR-A- 809 136**
**FR-A- 811 800**
**FR-A- 884 008**
**GB-A- 408 368**
**GB-A- 698 661**
**US-A- 1 935 735**

(73) Patentinhaber : **Hebeler, Dieter**
**Baumschulenweg 3b**
**D-2000 Schenefeld (DE)**

(72) Erfinder : **Hebeler, Dieter**
**Baumschulenweg 3b**
**D-2000 Schenefeld (DE)**

(74) Vertreter : **Richter, Werdermann & Gerbaulet**
**Neuer Wall 10**
**D-2000 Hamburg 36 (DE)**

**Beschreibung**

Die Erfindung betrifft einen Chip aus einem dünnen Scheibenkörper aus gerösteten, getrockneten oder gebackenen Südfrüchten, insbesondere Bananen, ein Verfahren zur Chipherstellung sowie eine Vorrichtung zur Durchführung des Verfahrens.

Das Überziehen von Früchten, wie z.B. Kirschen, Weintrauben, Bananen u.dgl. mittels einer Schokoladenmasse ist bekannt.

So ist es aus der FR-PS 884 008 bekannt, getrocknete Bananen vollständig oder teilweise mit Schokolade oder einem anderen Überzug zu überziehen.

Mit der FR-PS 811 800 ist vorgeschlagen worden, getrocknete Bananen, die mit einer Konfitürenlösung und einem Likör/Branntwein imprägniert und dann mit einem Fruchtgelee überzogen worden sind, abschließend mit einem Überzug aus einem Stoff wie z.B. Schokolade zu versehen. Dabei ist vorgesehen, möglicherweise auch Stücke getrockneter Bananen zu verwenden und so Halbkugeln, Würfel etc. zu erhalten.

Gemüsescheiben, insbesondere Kartoffelscheiben zu frittieren und dann mit einem Schokoladenüberzug zu versehen, ist aus der GB-PS 408 368 bekannt.

Die Handhabung derartiger, mit einer Schokoladenüberzugsmasse versehener Früchte wird jedoch dadurch beeinträchtigt, daß die Überzugsmasse oftmals nicht ausreichend an den Früchten anhaftet und bei der Handhabung oder beim Transport Abschnitte der Überzugsmasse von den Früchten abbröckeln, wodurch die schokoladenüberzogenen Früchte unansehnlich werden. Insbesondere ist hierbei die Beschädigung des Schokoladenüberzuges beim Transport zu berücksichtigen, zumal die dann entstehenden Beschädigungen nicht rückgängig gemacht und Ausbesserungen auch nicht vorgenommen werden können.

Andererseits sind Chips aus Südfrüchten, z.B. Bananen, sogenannte Bananenchips, bekannt, die in der Weise hergestellt werden, daß Bananenscheiben ein- oder mehrfach gebacken oder im Heißluftstrom getrocknet werden, wobei Zusätze von Zucker und-/oder Honig, u.a. auch Kokosfette, Verwendung finden können. Diese Chips sind sehr dünn und zerbrechen nicht nur oftmals bei der Handhabung, sondern bereits beim Transport, da die einzelnen Bananenscheibchen keine hohe Eigensteifigkeit haben.

Der Erfindung liegt daher die Aufgabe zugrunde, einen Chip aus Südfrüchten, insbesondere einen Bananenchip, zu schaffen, welcher hohe Festigkeitseigenschaften und eine hohe Eigensteifigkeit aufweist und somit besser gegen Tansportbeschädigungen gesichert ist. Außerdem soll trotz Erhöhung der Festigkeitseigenschaften die Handhabung vor dem Verzehr sauber sein und erleichtert werden. Darüber hinaus soll die Anordnung und die Haltbarkeit der Aromaschicht verbessert werden.

Zur Lösung dieser Aufgabe wird ein Chip aus einem dünnen Scheibenkörper aus gerösteten, getrockneten oder gebackenen Südfrüchten, insbesondere Bananen vorgeschlagen, bei dem gemäß der Erfindung vorgesehen ist, daß der Scheibenkörper ein- oder beidseitig, vollflächig oder teilflächig mit einer die Eigensteifigkeit des Chips erhöhenden Beschichtung aus Schokolade versehen ist, wobei der Scheibenkörper mit einer die Adhäsion zwischen dem Scheibenkörper und der Beschichtung erhöhenden Oberflächenprofilierung versehen ist.

Dadurch, daß der Chip, insbesondere Bananenchip, einen Überzug oder eine Beschichtung aus erhärteter Schokolade trägt, wobei unter Schokolade (Bitter-) Schokolade, Milchschokolade oder andere Schokoladenarten zu verstehen sind, wird durch diesen Überzug bzw. durch diese Beschichtung die Eigensteifigkeit der sehr dünnen Bananenscheibchen erhöht und die Stabilität dieser Bananenscheibchen wesentlich verbessert. Die Auswahl der Überzugs- oder Beschichtungsmasse erfolgt dabei so, daß sie einerseits zu einer Erhöhung der Eigensteifigkeit des Chip-Scheibenkörpers, andererseits aber nicht zu einer Verhärtung des Kauerlebnisses (mouth-feeling) gegenüber dem Ausgangsprodukt führt. Dadurch ist es möglich, auch sehr dünne Bananenscheibchen nach den bekannten Verfahren herzustellen, denn die in- oder beidseitige Beschichtung des Scheibenkörpers des Chips mittels Schokoladenüberzugsmasse erhöht ganz wesentlich die Eigensteifigkeit dieser Scheibenkörper, so daß eine Transportbeschädigung nicht mehr in dem Maße gegeben ist, wie dies bei Bananenchips ohne Beschichtung oder Überzug der Fall ist.

Durch die erfindungsgemäße Maßnahme wird eine hohe Haftung der Beschichtung an dem Scheibenkörper erreicht, so daß sowohl bei der Handhabung vor dem Verzehr als auch beim Transport ein Abbröckeln des Überzuges vermieden wird. Jedoch auch gebrochene Chips behalten ihren Überzug, da durch die vorgenommene Oberflächenprofilierung die Adhäsion zwischen dem Scheibenkörper und der Beschichtung ganz wesentlich erhöht wird.

Die teilflächenartige Anbringung der Beschichtung aus Schokolade verbessert die Handhabung derartiger Chips vor dem Verzehr insofern ganz wesentliche, als beschichtungsfreie Abschnitte an den einzelnen Chips geschaffen werden, so daß beim Ergreifen einzelner Chips die Finger der Hand nicht mit der Schokolade in Berührung kommen, so daß z.B. auch leicht schmelzende Schokolade Verwendung finden kann. Jedoch ist es immer erforderlich, eine Schokolade als Beschichtung für die Scheibenkörper zu verwenden, die einen festen und

in sich geschlossenen Überzug bzw. eine derartige Beschichtung bildet und zur Erhöhung der Festigkeit der dünnen Scheibenkörper beiträgt.

Weiterhin ist es Aufgabe der Erfindung, ein Verfahren zur Herstellung von Chips aus Südfrüchten, insbesondere Bananenchips, zu schaffen, mit dem eine festere Verbindung von Beschichtungen untereinander und mit den Chips erreichbar ist. Hierzu soll gleichzeitig eine entsprechende Vorrichtung ausgebildet werden.

Vorteilhafte Ausgestaltungen der Erfindung sind in den Unteransprüchen gekennzeichnet.

Ausführungsbeispiele des Standes des Technik und der Erfinfung werden nachstehend anhand der Zeichnung näher erläutert. Es zeigen die fig. 1-11 und 13, 14 Ausführungsformen nach dem Stand der Tecknick, und zwar

Fig. 1 in einer Ansicht von oben einen mit einer Beschichtung aus einer Schokolade versehenen Bananenchip,

Fig. 2 einen senkrechten Schnitt gemäß Linie II-II in Fig. 1,

Fig. 3 in einer Ansicht von oben eine weitere Ausführungsform eines Bananenchips mit beschichtungsfreiem Griffabschnitt,

Fig. 4 einen senkrechten Schnitt gemäß Linie IV-IV in Fig. 3,

Fig. 5 in einer Ansicht von oben einen Bananenchip mit einer streifenförmigen Anordnung der Beschichtung aus Schokolade,

Fig. 6 einen senkrechten Schnitt gemäß Linie VI-VI in Fig. 5,

Fig. 7 in einer Ansicht von oben einen Bananenchip mit einer mittigen Beschichtung aus Schokolade und mit einem umlaufenden, beschichtungsfreien Griffabschnitt,

Fig. 8 einen senkrechten Schnitt gemäß Linie VIII-VIII in Fig. 7,

Fig. 9 in einer Ansicht von oben einen Bananenchip mit einer ringartigen Beschichtung aus einer Schokolade und mit einem mittigen, beschichtungsfreien Griffabschnitt,

Fig. 10 einen senkrechten Schnitt gemäß Linie X-X in Fig. 9,

Fig. 11 einen senkrechten Schnitt durch einen mit einer beidseitigen Beschichtung aus einer Schokolade bestehenden Chip, bei dem zwischen der Beschichtung und dem Scheibenkörper eine aromahaltige Schicht angeordnet ist, Fig. 13 in einer Ansicht von oben eine weitere Ausführungsform eines Bananenchips mit einer einseitigen Beschichtung und einem beschichtungsfreien umlaufenden Rand als Griffbereich, Fig. 14 einen senkrechten Schnitt gemäß Linie XIV-XIV in Fig. 13.

Fig. 12 zeigt einen senkrechten Schnitt durch einen Chip mit einer haftungserhöhenden Ausgestaltung der Oberfläche des Scheibenkörpers gemäß der Erfindung, und

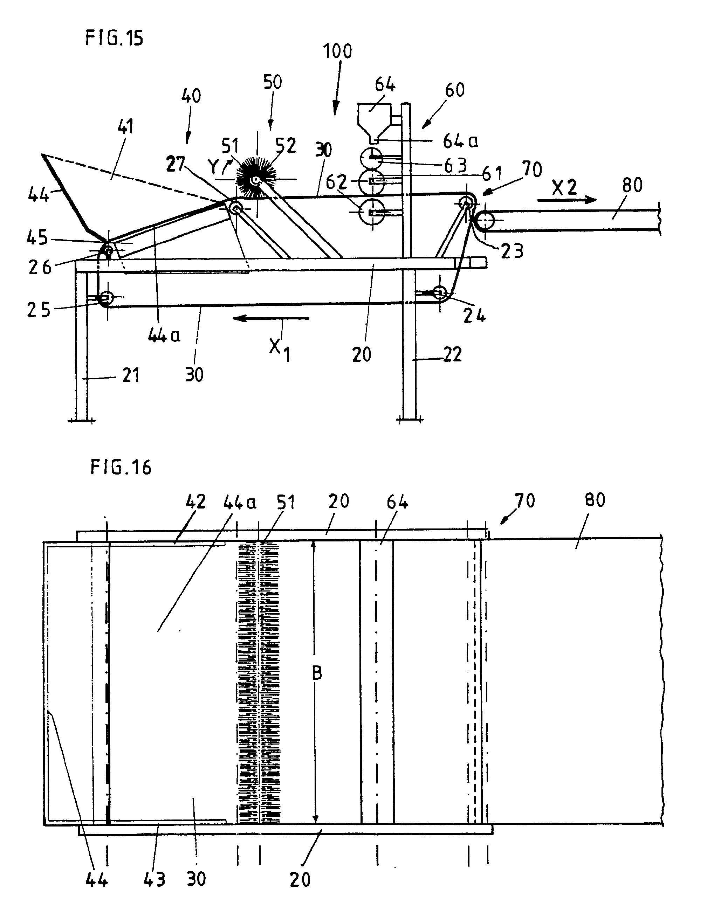

Fig. 15 in einer Seitenansicht eine Vorrichtung zur erfindungsgemäßen Oberflächenprofilierung, und

Fig. 16 in einer Ansicht von oben die Vorrichtung gemäß Fig. 13.

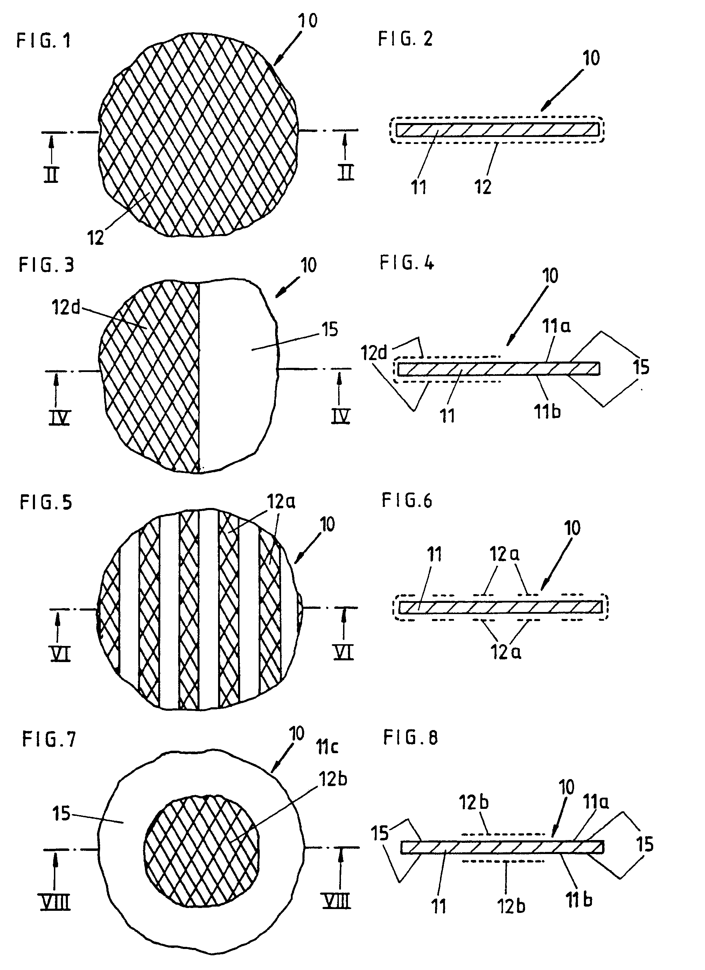

Bei den in den Fig. 1 bis 14 dargestellten und mit 10 bezeichneten Chips handelt es sich um dünne Scheibenkörper 11 aus gerösteten, getrockneten oder gebackenen Südfrüchten, insbesondere Bananen. Von diesen bekannten Herstellungsverfahren für Chips und insbesondere Bananenchips wird beim vorliegenden Gegenstand ausgegangen.

Der Scheibenkörper 11 des Chips 10 ist ein- oder beidseitig mit einer Beschichtung 12 aus einer an sich bekannten Schokoladenüberzugsmasse versehen, um die Eigensteifigkeit des Scheibenkörpers 11 zu erhöhen, dessen Oberseite mit 11a und dessen Unterseite mit 11b bezeichnet sind. Sein umlaufender Rand ist bei 11c angedeutet (Fig. 7 und 8). Als Schokolade für den Überzug bzw. die Beschichtung können alle Schokoladenarten Verwendung finden, z.B. Kuvertüre, Milch-, Sahne- oder Mokkaschokolade. Wesentlich ist, daß für die Beschichtung 12 eine Schokoladenüberzugsmasse verwendet wird, die nach dem Erkalten einen festen, in sich geschlossenen Überzug ergibt, um die Stabilität des Scheibenkörpers 11 zu erhöhen.

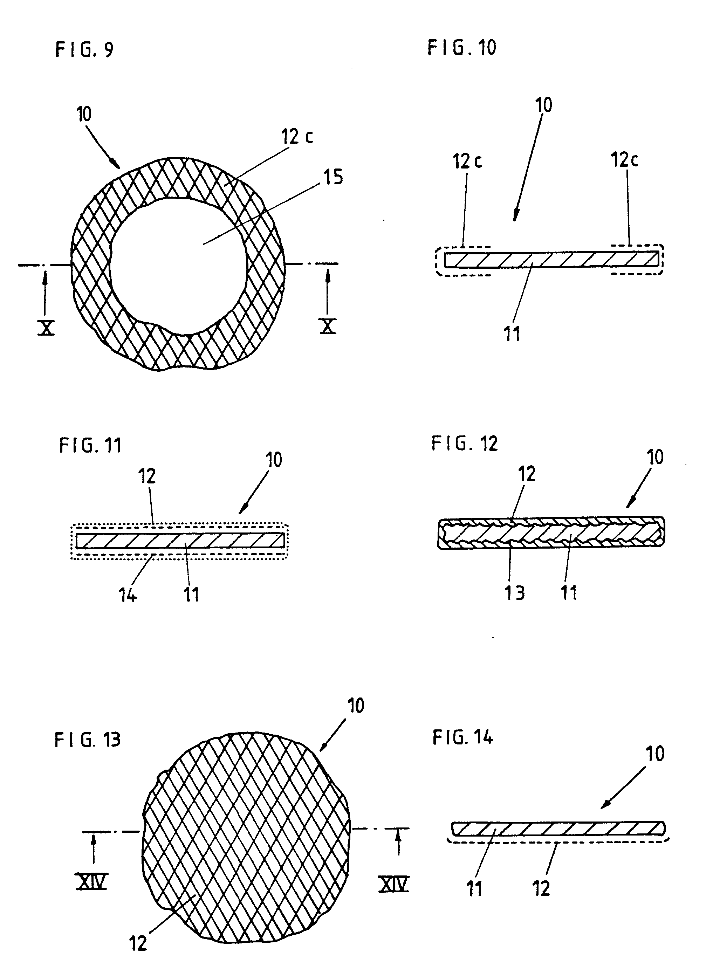

Die Beschichtung 12 kann ein- oder beidseitig auf dem Scheibenkörper 11 vorgesehen sein, wobei die Beschichtung kein vollständig geschlossener und den Scheibenkörper 11 umgebender Überzug zu sein braucht. Die Beschichtung 12 kann auch nur auf der Oberseite 11a oder der Unterseite 11b des Scheibenkörpers 11 vorgesehen sein. Bei den in Fig. 1 bis 12 dargestellten Ausführungsbeispielen ist die Beschichtung 12 auf beiden Seiten des Scheibenkörpers 11 und bei der Ausführungsform in Fig. 13 und 14 an einer Seite des Scheibenkörpers 11 vorgesehen.

Die Beschichtung 12 kann vollflächig oder teilflächig auf den Flächen des Scheibenkörpers 11 angebracht sein. Bei dem in Fig. 1 und 2 gezeigten Ausführungsbeispiel ist sowohl die Oberseite 11a als auch die Unterseite 11b des Scheibenkörpers 11 vollflächig mit der Beschichtung 12 versehen. Eine Teilflächenbeschichtung ist den Ausführungsbeispielen gemäß Fig. 3 bis 10 zu entnehmen.

Nach Fig. 3 und 4 ist die Beschichtung aus Schokolade halbflächig auf der Oberseite und der Unterseite des Scheibenkörpers 11 angebracht. Hier ist die Beschichtung mit 12d bezeichnet. Der beschichtungsfreie Abschnitt des Scheibenkörpers 11 ist bei 15 angedeutet. Dieser Abschnitt 15 stellt für die saubere Handhabung der Chips den Griffabschnitt dar. Auch bei einer halbflächigen Beschichtung des Scheibenkörpers 11 ist eine ausreichende Stabilität des Scheibenkörpers 11 gewährleistet, wobei es vorteilhaft ist, wenn die beschichtete Fläche den größeren Teil der Oberfläche des Scheibenkörpers 11 einnimmt. Eine Beschichtung 12a aus Schokolade in Form von Streifen ist in den Fig. 5 und 6 dargestellt. Auch diese streifenförmige Beschichtung trägt zur Festigkeit des Scheibenkörpers 11 bei, wobei auch eine Beschichtung mit Schokolade in Form eines Gitters vorgenommen werden kann.

Zur Ausbildung eines beschichtungsfreien Griffabschnittes 15 kann die Beschichtung 12b z.B. in Form einer Kreisfläche auch mittig auf dem Scheibenkörper 11 vorgesehen sein (Fig. 7 und 8). Der beschichtungsfreie Griffabschnitt 15 ist dann etwa ringförmig verlaufend zum umlaufenden Rand 11c des Scheibenkörpers 11. Strahlenförmig verlaufende Stege von der mittigen Beschichtungsfläche 12b zum umlaufenden Rand 11c des Scheibenkörpers 11 tragen zur Erhöhung der Stabilität des Scheibenkörpers 11 bei.

Bei dem in Fig. 9 und 10 gezeigten Ausführungsbeispiel ist der beschichtungsfreie Griffabschnitt 15 mittig angeordnet, so daß die mit 12c bezeichnete Beschichtung aus Schokolade ringförmig im äußeren umlaufenden Bereich des Scheibenkörpers 11 angeordnet ist.

Es besteht die Möglichkeit, Aromastoffe bereits in die Schokolade mit einzuarbeiten. Besonders vorteilhaft ist die Anordnung einer aromahaltigen Schicht 14 auf der Oberseite des Scheibenkörpers 11, wobei dann diese aromahaltige Schicht 14 von der Beschichtung 12 aus Schokolade umhüllt ist und das Aroma über einen längeren Zeitraum am Scheibenkörper des Chips haften bleibt. Diese aromahaltige Schicht 14 kann bei Verwendung entsprechender Fette als zusätzlicher Stabilisator für den Scheibenkörper herangezogen werden, wobei gleichzeitig besonders vorteilhafterweise ein Schutz gegen die Aufnahme von Feuchtigkeit durch den Chip gewährleistet wird, so daß der Chip über einen langen Zeitraum die gewünschte Formstabilität und Festigkeit behält.

Um die Adhäsion zwischen der Beschichtung 12 und der Oberfläche des Scheibenkörpers 11 gemäß der Erfindung zu erhöhen, ist die Oberfläche des Scheibenkörpers 11 mit einer Profilierung 13 versehen (Fig. 12). Diese Oberflächenprofilierung 13 kann bei der Herstellung des Scheibenkörpers 11, also während des Röst-, Back- oder Trocknungsvorganges, mittels mechanischer Einrichtungen vorgenommen werden ; jedoch auch eine Oberflächenprofilierung durch Aufrauhung mittels unter Druck auftreffender Luft kann herangezogen werden. Bevorzugterweise ist vorgesehen, daß die Oberflächenprofilierung vor dem Aufbringen der aromahaltigen Schicht durchgeführt wird. Hierzu werden die Chips ein- oder beidseitig von rotierenden Bürsten oder Profilierungswalzen beaufschlagt. Durch die Profilierung entsteht einerseits eine größere Aufnahmefläche für die aromahaltige Beschichtung und den Schokoladenüberzug, gleichzeitig wird auch die Verankerung der Beschichtungen an dem Chip erhöht. Erhalten die Chips während des Herstellungsverfahrens Zucker oder Honig als Zusätze, dann kann nach Beendigung des Herstellungsverfahrens die Oberfläche des Scheibenkörpers 11 mittels Heißdampf od.dgl. angelöst werden, so daß dann die Beschichtung 12 vermittels einer klebenden Wirkung an dem Scheibenkörper 11 gehalten wird.

Die voranstehend beschriebenen Behandlungen der Chips zur Herstellung des fertigen, eine Schokoladenbeschichtung aufweisenden Chips, können vorteilhafterweise mit der nachstehend beschriebenen Vorrichtung durchgeführt werden. Die in den Fig. 13 und 14 dargestellte und mit 100 bezeichnete Vorrichtung besteht aus einem Tragrahmen 20, der mit Standholmen 21, 22 versehen ist, die an ihren bodenseitigen Enden mit Laufrollen versehen sein können, um die Vorrichtung zu einer entsprechenden, in der Zeichnung nicht dargestellten und bei 80 angedeuteten Tunkmaschine zu verfahren.

In dem Tragrahmen 20 ist über Umlenkrollen 23, 24, 25, 26, 27 ein endloses Förderband 30 geführt, das beispielsweise als Drahtgitterband ausgebildet sein kann. Am einen Ende des Tragrahmens 20 ist eine Vereinzelungseinrichtung 40 angeordnet, die aus einer an dem Tragrahmen angeordneten Aufgabeschale 41 und der Vibrations- und Rütteleinrichtung 45 besteht. Die Aufgabeschale 41 ist dabei Seitenwände 42, 43 und eine Einlaufwand 44 aufweisend so angeordnet, daß in die Aufgabeschale 41 eingelegte Rohchips dem im Bodenbereich der Aufgabeschale 41 verlaufenden Förderband 30 zugeführt werden. Unterhalb des Förderbandes 30 ist dabei die Vibrations- und Rütteleinrichtung 45 angeordnet, die als mechanische oder elektromagnetische Schwingeinrichtung ausgebildet sein kann und das Förderband im gesamten Bodenbereich 44a der Aufgabeschale 41 beaufschlagt.

An dem Tragrahmen 20 ist im Mittelbereich die Oberflächenprofilierungseinrichtung 50 angeordnet, die aus einer eine der Förderbandbreite B entsprechende Länge aufweisenden Bürstenwalze 51 besteht. Auf der Bürstenwalze 51 sind entsprechend geeignete Borsten 52 so angeordnet, daß sie das Förderband und ggfs. darauf liegende Chips beaufschlagen. Dabei dreht sich die Bürstenwalze 51 in Richtung Y entgegen der Umlaufrichtung des Förderbandes 30, so daß die Chips mit einer durch die Borsten 52 aufgebrachten Oberflächenprofilierung in Form von Längsrillen und -riefen versehen werden.

Im der Vereinzelungseinrichtung 40 gegenüberliegenden Endbereich des Tragrahmens 20 ist die Aromaschichtauftragseinrichtung 60 angeordnet. Diese besteht aus zwei oben- und untenseitig des Förderbandes 30 gegenüberliegend und das Förderband 30 federnd-elastisch druckbeaufschlagend angeordneten Auftragswalzen 61, 62. Oberhalb der Auftragswalze 61 ist eine Aromatisierungsmittel-Verteilwalze 63 angeordnet, der aus dem Aromatisierungsmittel-Vorratsbehälter 64 über die Dosiereinrichtung 64a Aromatisierungsmittel zugeführt wird und dieses auf der Auftragswalze 61 verteilt. Die Auftragswalze 62 kann ebenfalls mit einer entsprechenden Aromatisierungsmittelversorgungseinrichtung versehen sein. Es kann jedoch auch vorgesehen werden, die Chips nur einseitig, nämlich auf der oberflächenprofilierten Seite mit Aromatisierungsmittel zu versehen. Im Endbereich des Tragrahmens 20 wird das Förderband 30 so geführt, daß vom Förderband 30 mitgeführte Chips auf ein entsprechendes Zuführband 80 übergebbar sind, so daß die Chips in Förderrichtung X2 einer Schokoladentunkmaschine oder Halbtunkmaschine bekannter Art zuführbar sind.

Die Vorrichtung 100 arbeitet wie folgt : Die zu beschichtenden Chips werden in die Aufgabeschale 41 eingegeben, wo sie im Bodenbereich 44a auf das Förderband 30 fallen. Durch die Beaufschlagung des Förderbandes 30 durch die Vibrations- und Rütteleinrichtung 45 erfolgt eine Verteilung der Chips derart, daß keine Chips mehr übereinander liegen, sondern sich die Chips relativ gleichmäßig auf die Förderbandfläche verteilen. Die Art der Verteilung und die Bewegungsrichtung der Chips auf dem Förderband sind durch die Wahl der Frequenz und die Bewegungsrichtung der Vibrationen vorwählbar. Vom Förderband 30 werden die Chips sodann der Oberflächenprofilierungseinrichtung 50 zugeführt, d.h. die auf dem Förderband 30 befindlichen Chips werden unter der Bürstenwalze 51 hindurchgeführt, die mit den Borsten 52 auf die Chips eine entsprechende Oberflächenprofilierung und Aufrauhung aufbringt. Sodann werden die Chips vom Förderband 30 zwischen den Auftragswalzen 61, 62 hindurchgeführt, die die Chips mit einer Beschichtung von Aromatisierungsmitteln versehen. Über die Abgabeeinrichtung 70 werden die Chips dann einer weiteren Behandlungsvorrichtung zugeführt.

Die Chips sind somit vereinzelt auf dem Förderband angeordnet, so daß sie ohne weitere Vorsortierung einer Tunkmaschine zugeführt werden können und weisen eine ausreichende Oberflächenprofilierung auf, so daß eine Beschichtung mit Schokoladenmassen sicher auf den Chips angeordnet werden kann. Durch die über die Oberflächenprofilierung erreichte Vergrößerung der Chipoberfläche ist auch eine Vergrößerung der Aromatisierungsmittel aufnehmenden Oberfläche erreichbar, so daß eine ausreichende Menge des Aromatisierungsmittels auf die Chipoberfläche aufbringbar ist.

Durch die Ausbildung eines umlaufenden Förderbandes ist eine kontinuierliche Vereinzelung, Oberflächenprofilierung und Aromatisierungsbeschichtung der Chips möglich, wobei der Vorrichtung ungeordnete Chips zugeführt werden, die für die Weiterbehandlung vorbereitet von der Vorrichtung abgegeben werden.

Der in der Zeichnung nicht dargestellte Antrieb des Förderbandes 30 kann als kontinuierlich arbeitender Elektroantrieb oder als Schrittantrieb ausgebildet sein. Dies richtet sich nach den Erfordernissen der die Chips weiterverarbeitenden Vorrichtung.

## Ansprüche

1. Chip (10) aus einem dünnen Scheibenkörper (11) aus gerösteten, getrockneten oder gebackenen Südfrüchten, insbesondere Bananen mit einem Schokoladenüberzug, dadurch gekennzeichnet, daß der Scheibenkörper (11) ein- oder beidseitig, vollflächig oder teilflächig mit einer die Eigensteifigkeit des Chips erhöhenden Beschichtung (12) aus Schokolade versehen ist, wobei der Scheibenkörper (11) mit einer die Adhäsion zwischen dem Scheibenkörper (11) und der Beschichtung (12) erhöhenden Oberflächenprofilierung (13) versehen ist.

2. Chip nach Anspruch 1, dadurch gekennzeichnet, daß der Scheibenkörper (11) einen beschichtungsfreien Griffabschnitt (15) aufweist.

3. Chip nach Anspruch 2, dadurch gekennzeichnet, daß der Griffabschnitt (15) benachbart zum umlaufenden Rand (11c) des Scheibenkörpers (11) ausgebildet ist.

4. Chip nach einem der Ansprüche 1 bis 3, dadurch gekennzeichnet, daß zwischen der Oberfläche des Scheibenkörpers (11) und der Beschichtung (12) eine aromahaltige Schicht (14) angeordnet ist, die mittels der Beschichtung (12) abgedeckt ist.

5. Verfahren zur Herstellung von Chips aus gerösteten, getrockneten oder gebackenen Südfrüchten, insbesondere Bananen mit einem Schokoladenüberzug, dadurch gekennzeichnet, daß während der Herstellung der Chips die Chipoberfläche mechanisch z.B. mittels rotierender Bürsten oder mittels auftreffender Druckluftstrahlen aufgerauht oder mittels Zeipdampf od.dgl. angelöst wird und die so vorbehandelten Chips nach dem Abkühlen ein- oder beidseitig, vollflächig oder teilflächig mit einer die Eigensteifigkeit des Chips erhöhenden Beschichtung aus Schokolade versehen werden.

6. Verfahren nach Anspruch 5, dadurch gekennzeichnet, daß vor dem Aufbringen der Beschichtung aus Schokolade auf die Scheibenkörper der Chips eine aromahaltige Schicht aufgebracht wird, die von der Beschichtung aus Schokolade luftdicht abgeschlossen ist.

7. Verfahren nach Anspruch 6, dadurch gekennzeichnet, daß die aromahaltige Schicht durch Aufsprühen aufgebracht wird oder die aromahaltige Schicht vermittels einer aus einem porösen Schaumkunststoff bestehenden Auftragwalze aufgebracht wird.

8. Verfahren nach einem der vorangegangenen Ansprüche 5 bis 7, dadurch gekennzeichnet, daß vor dem Aufbringen der aromahaltigen Schicht vermittels einer Profilwalze oder einer rotierenden Bürste eine Oberflächenprofilierung ein- oder beidseitig auf die Scheibenkörper der Chips aufgebracht wird.

9. Verfahren nach einem der vorangegangenen Ansprüche 5 bis 8, dadurch gekennzeichnet, daß die Beschichtung aus Schokoladenüberzugsmasse auf den Scheibenkörpern der Chips unter Ausbildung von beschichtungsfreien Randabschnitten aufgebracht wird.

10. Verfahren nach einem der vorangegangenen Ansprüche 5 bis 9 unter Verwendung von Zucker, Honig und Fett zur Herstellung der Chips, dadurch gekennzeichnet, daß vor dem Aufbringen der Beschichtung aus Schokoladenüberzugsmasse die Oberflächen der Scheibenkörper mittels Heißdampf od.dgl. angelöst werden und während des Trocknungsvorganges die Beschichtung aus Schokolade aufgebracht wird.

11.Vorrichtung zur Herstellung von Chips aus gerösteten, getrockneten oder gebackenen Früchten, insbesondere Bananen, dadurch gekennzeichnet, daß in einem Tragrahmen (20) ein über an dem Tragrahmen (20) angeordnete Umlenkrollen (23, 24, 25, 26, 27) geführtes endloses Förderband (30) in einer Bewegungsrichtung X1 nacheinander eine Vereinzelungseinrichtung (40), eine Oberflächenprofilierungseinrichtung (50) und eine Aromaschichtauftragseinrichtung (60) durchlaufend angeordnet ist, wobei die Vereinzelungseinrichtung (40) aus einer an dem Tragrahmen (20) angeordneten, Seitenwände (42, 43) und eine Einlaufwand (44) aufweisenden Aufgabeschale (41), die nach unten offen ist und in deren Bodenbereich (44a) das Förderband (20) verläuft, und einer im Bodenbereich (44a) der Aufgabeschale (41) unterhalb des Förderbandes (30) an dem Tragrahmen (20) angeordneten, das Förderband (30) beaufschlagenden Vibrations- und Rütteleinrichtung (45), die Oberflächenprofilierungseinrichtung (50) aus einer der Förderbandbreite B entsprechenden Länge aufweisenden Bürstenwalze (51) mit darauf angeordneten, das Förderband (20) beaufschlagenden Borsten (52) aus Naturborsten, Draht oder Kunststoff, und die Aromaschichtauftragseinrichtung (60) aus zwei oben- und untenseitig des Förderbandes (30) gegenüberliegend und das Förderband 30 federnd-elastisch druckbeaufschlagend angeordneten Auftragswalzen (61, 62), die über eine Aromatisierungsmittel-Verteilwalze (63) und einen Aromatisierungsmittel-Vorratsbehälter (64) über eine entsprechende Dosiereinrichtung (64a) mit Aromatisierungsmittel versehbar sind, besteht, und daß über das mit einer Antriebseinrichtung in eine Umlaufbewegung versetzbare Förderband (30) in die Aufgabeschale (41) aufgegebene Chips nach Durchlaufen der Vereinzelungseinrichtung (40), der Oberflächenprofilierungseinrichtung (50) und der Aromaschichtauftragseinrichtung (60) einer Abgabeeinrichtung (70) zuführbar sind.

## Claims

1. Chip (10) consisting of a thin disc (11) of roasted, dried or fried citrus and tropical fruit, in particular bananas, with chocolate icing, characterized in that the disc (11) on one or both sides over a part or the whole surface is provided with a chocolate icing (12) increasing the chip's rigidity, the disc (11) being provided with a surface profile (13) to reinforce the adhesive force between the disc (11) and the icing (12).

2. Chip according to claim 1, characterized in that the disc (11) has an icing-free gripping section (15).

3. Chip according to claim 2, characterized in that the gripping section (15) is adjacent to the circumference (11c) of the disc (11).

4. Chip according to any of the claims 1 to 3, characterized in that between the surface of the disc (11) and the icing (12) an aromatic coat (14) is provided which is covered by the icing (12).

5. Method of producing chips of roasted, dried or fried citrus and tropical fruit, in particular bananas, with chocolate icing, characterized in that during the production of the chips the chip surface is mechanically roughened or partially dissolved e.g. by means of rotating brushes or an impacting compressed-air beam or by means of hot air or similar, and that the pretreated chips provided after cooling are lined with a rigidity increasing chocolate icing on one or both sides over the whole or over a part of the surface.

6. Method according to claim 5, characterized in that prior to the application of chocolate icing to the disc of the chips an aromatic coat is provided which is then covered airtight by the chocolate icing.

7. Method according to claim 6, characterized in that the aromatic coat is applied by spraying or by means of a spreader roll of porous plastic foam.

8. Method according to any of the preceding claims 5 to 7, characterized in that prior to the application of aromatic coat a profile is provided by means of a profile roller or a rotating brush to one or both sides of the disc of the chip.

9. Method according to any of the preceding claims 5 to 7, characterized in that the chocolate-mass icing is applied to the discs of the chips by leaving marginal sections uncovered.

10. Method according to any of the preceding claims 5 to 9 using sugar, honey and fat to produce chips, characterized in that prior to the application of the chocolate-mass icing the disc surface is partially dissolved by means of hot air or similar and that the chocolate icing is applied during the drying process.

11. Apparatus for producing chips of roasted, dried or fried fruit, in particular bananas, characterized in that an endless conveyor belt (30) guided by deflection pulleys (23, 24, 25, 26, 27) which are arranged on the supporting frame (20) is provided in the supporting frame (20), the conveyor belt, in the moving direction X1, passing through a decollating unit (40), a surface moulding unit (50), and a aromatic coat applicator (60), the decollating unit (40) having a feeding tray (41) arranged on the supporting frame (20) with lateral walls (42, 43) and one feeding wall (44) and an open bottom through which bottom area (44a) passes the conveyor belt, and a vibrating and shaking unit (45) arranged at the bottom area (44a) of the feeding tray (41) underneath the conveyor belt (30) on the supporting frame (20) admitting the conveyor belt (30), the surface moulding unit (50) comprising a brush roller (51), which length corresponds to the width B of the conveyor belt, with mounted bristles (52) of natural product, wire or plastic admitting the conveyor belt (20), and the aromatic coat applicator (60) comprising two application rollers (61, 62) on top and at the bottom of and opposite the conveyor belt (30) and resiliently admitting the conveyor belt (30), the application rollers allowing to be fed with aromatic substance by means of an aromatic-substance spreading roller (63) and an aromatic-substance tank (64) via a corresponding dosage unit (64a), and that chips fed into the feeding tray (41) by means of the conveyor belt (30) which is brought into rotating movement by means of a drive, are filled into a discharge unit (70) after having passed through the decollating unit (40), the surface moulding unit (50) and the aromatic coat applicator (60).

## Revendications

1. Chip (10) constitué par un mince corps de rondelle (11) constitué par des fruits méditerranéens et tropicaux rôtis, séchés ou cuits au four, en particulier par des bananes avec une couverture de chocolat, caractérisé en ce que le corps de rondelle (11) est pourvu d'un enrobage (12) en chocolat, d'un côté ou des deux côtés, sur toute la surface ou sur une partie de la surface, qui accroît la stabilité propre du chip, le corps de rondelle (11) étant pourvu d'un profilage de surface (13) qui augmente l'adhésion entre le corps de rondelle (11) et l'enrobage (12).

2. Chip selon la revendication 1, caractérisé en ce que le corps de rondelle (11) présente une portion pour manipulation (15) exempte d'enrobage.

3. Chip selon la revendication 2, caractérisé en ce que la portion pour manipulation (15) est formée en étant voisine du bord (11c) qui fait le tour du corps de rondelle (11).

4. Chip selon l'une des revendications 1 à 3, caractérisé en ce qu'une couche aromatique (14) est placée entre la surface du corps de rondelle (11) et l'enrobage (12), couche aromatique qui est recouverte par l'enrobage (12).

5. Procédé pour la fabrication de chips constitués par des fruits méditerranéens et tropicaux rôtis, séchés ou cuits au four, en particulier des bananes avec une couverture de chocolat, caractérisé en ce que, pendant la fabrication des chips, la surface des chips est rendue rugueuse par exemple au moyen de brosses rotatives ou de jets d'air comprimé qui font choc ou corrodée au moyen de vapeur surchauffée ou équivalent et que les chips ainsi prétraités sont pourvus, après refroidissement, d'un enrobage de chocolat, d'un côté ou des deux côtés, sur toute leur surface ou sur une partie de leur surface qui accroît la stabilité propre du chip.

6. Procédé selon la revendication 5, caractérisé en ce qu'une couche aromatique est appliquée sur les corps de rondelle des chips avant d'appliquer l'enrobage de chocolat, couche qui est recouverte de manière hermétique par l'enrobage de chocolat.

7. Procédé selon la revendication 6, caractérisé en ce que la couche aromatique est appliquée par pulvérisation ou qu'elle est appliquée au moyen d'un rouleau d'application constitué en une matière plastique mousse poreuse.

8. Procédé selon l'une des revendications précédentes 5 à 7, caractérisé en ce qu'un profilage de surface est appliqué sur l'un des côtés ou les deux côtés des corps de rondelle des chips avant que la couche aromatique ne soit appliquée à l'aide d'un rouleau à profil ou d'une brosse rotative.

9. Procédé selon l'une des revendications précédentes 5 à 8, caractérisé en ce que l'enrobage en couverture de chocolat est appliquée sur les corps de rondelle des chips en formant des portions marginales exemptes d'enrobage.

10. Procédé selon l'une des revendications précédentes 5 à 9 qui utilise du sucre, du miel et des matières grasses pour la fabrication des chips, caractérisé en ce qu'avant d'appliquer l'enrobage en couverture de chocolat, les surfaces des corps de rondelles sont corrodées par de la vapeur surchauffée ou équivalent et que l'enrobage de chocolat est appliqué pendant le processus de séchage.

11. Dispositif pour la fabrication de chips constitués par des fruits rôtis, séchés ou cuits au four, en particulier des bananes, caractérisé en ce qu'une bande transporteuse (30) est placée dans un cadre porteur (20), en étant guidée sans fin par des poulies de guidage (23, 24, 25, 26, 27) placées sur le cadre porteur (20), en traversant, dans un sens de déplacement X1, l'un après l'autre un dispositif de distribution un par un (40), un dispositif de profilage de surface (50) et un dispositif d'application de la couche aromatique (60), le dispositif de distribution un par un (40) se composant d'un bac d'alimentation (41), placé sur le cadre porteur (20) et présentant des parois latérales (42, 43) et une paroi d'entrée (44), qui est ouvert vers le bas, la bande transporteuse (20) passant dans la zone de fond (44a), et d'un dispositif de vibration et à secousses (45) placé sur le cadre porteur (20) dans la zone de fond (44a) du bac d'alimentation (41) sous la bande transporteuse (30)et donnant de l'impact à la bande transporteuse (30), le dispositif de profilage de surface (50) se composant d'un rouleau brosseur (51), d'une longueur correspondant à la largeur B de la bande transporteuse, avec des poils (52) placés dessus qui agissent sur la bande transporteuse en poils naturels, en fil de fer ou en matière plastique, et le dispositif d'application de la couche aromatique (60) se composant de deux rouleaux d'application (61, 62) placés l'un en face de l'autre sur le côté supérieur et sur le côté inférieur de la bande transporteuse (30) et agissant par pression élastique à la manière d'un ressort sur la bande transporteuse (30) qui peuvent être pourvus de substance d'aromatisation par un dispositif de dosage correspondant (64a) au moyen d'un rouleau de répartition de substance d'aromatisation (61, 62) et d'un réservoir de substance d'aromatisation et que les chips qui ont été chargés dans le bac d'alimentation (41) par la bande transporteuse (30), à laquelle il peut être inculqué un mouvement de rotation par un dispositif de commande, peuvent être amenés à un dispositif de distribution (70) après avoir traversé le dispositif de distribution un par un (40), le dispositif de profilage de surface (50) et le dispositif d'application de la couche aromatique (60).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG.15

FIG.16